# EUROPEAN PATENT APPLICATION

(11) **EP 2 782 300 A1**
(43) Date of publication of application: **24.09.2014**
(21) Application number: 13822775.6
(22) Date of filing: 23.07.2013
(51) Int. Cl.: H04L 12/721

(54) **TWO-LAYER ACCESS METHOD, DEVICE AND SYSTEM IN HFC NETWORK**

(30) Priority: 23.07.2012 CN 201210256018
(71) Applicant: Huawei Technologies Co., Ltd., Shenzhen, Guangdong 518129 (CN)
(72) Inventor: KE, Bo, Shenzhen Guangdong 518129 (CN); HE, Qingtao, Shenzhen Guangdong 518129 (CN); SHEN, Chenghu, Shenzhen Guangdong 518129 (CN)
(74) Representative: Pfenning, Meinig & Partner GbR
(86) International application number: PCT/CN2013/079876
(87) International publication number: WO 2014/015786

(57) **Abstract**

The present invention provides a Layer 2 access method, device and system on a hybrid fiber coaxial network, where the method includes: receiving a DHCP packet of a terminal device, extracting a source MAC address and a device type from the DHCP packet, and generating a correspondence between the source MAC address and an SVLAN according to a correspondence between the device type and the SVLAN; and when a data packet of the terminal device is received, extracting the source MAC address from the data packet, obtaining the corresponding SVLAN according to the correspondence between the MAC address and the SVLAN that is stored, and forwarding the data packet of the terminal device according to the corresponding SVLAN.

## Description

This application claims priority to Chinese Patent Application No. 201210256018.9, filed with the Chinese Patent Office on July 23, 2012 and entitled "LAYER 2 ACCESS METHOD, DEVICE AND SYSTEM ON HFC NETWORK", which is hereby incorporated by reference in its entirety.

### TECHNICAL FIELD

The present invention relates to the field of communications, and in particular, to a Layer 2 access method, device and system on an HFC network.

### BACKGROUND

A twisted pair xDSL (Digital Subscriber Line, digital subscriber line) and an optical fiber can provide a broadband access service. A coaxial cable (Cable) can also provide a broadband access service.

A conventional broadcast television network is a typical unidirectional-channel network, and data can be transmitted only from a video headend (Header, HE) to a set top box (Set Top Box, STB) at a user's home, but cannot be transmitted from the set top box to the video headend. A primary task for supporting a broadband service is to reconstruct a broadcast television network to a bidirectional network, which simultaneously supports two transmission directions of "HE -> STB" and "STB -> HE", and also needs to support bandwidth control and quality of service (Quality of Service, QoS) assurance.

There are a variety of technical standards for supporting a bidirectional broadband service on a coaxial cable, among which the most famous and sophisticated technical standard is the Data Over Cable Service Interface Specification (Data Over Cable Systems Interface Standard, DOCSIS) formulated by North America. Version 1.0 of the standard was published in 1999. Then the standard was constantly updated and improved, and version 3.0 was published in 2008. According to a definition in DOCSIS 3.0, a bandwidth modulated by a coaxial cable may exceed a bandwidth provided by a twisted pair, and may even rival a bandwidth of fiber access. Based on the DOCSIS standard, Europe formulates a localized Euro-DOCSIS standard to support a bidirectional service of cable televisions. China is formulating a Chinese edition of the DOCSIS standard that conforms to its national conditions: C-DOCSIS, which is used to provide guidance for a bidirectional service of cable televisions.

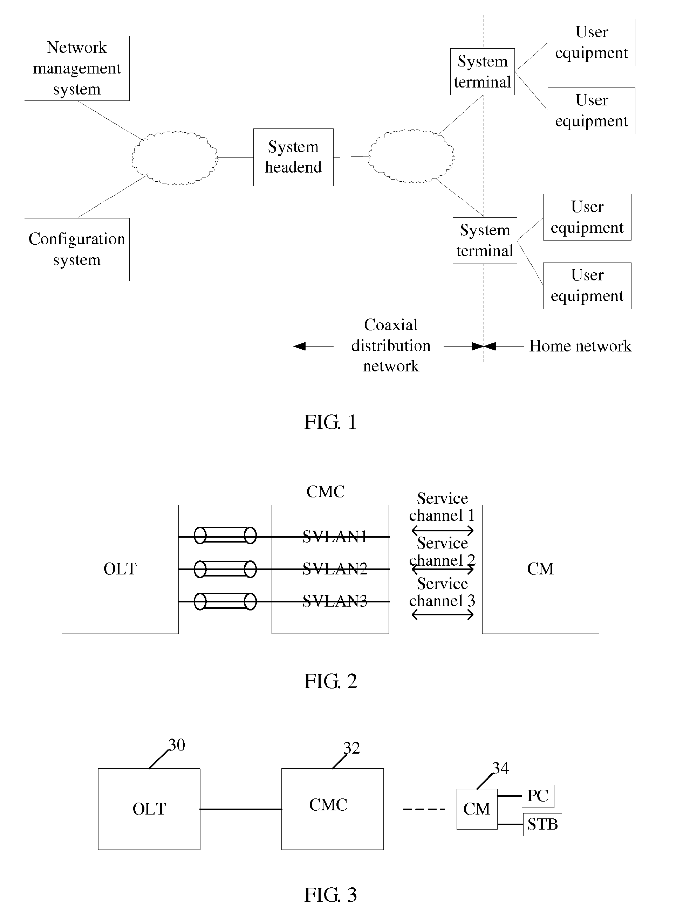

A C-DOCSIS system is formed of several parts, including a system headend, a system terminal, a configuration system, and a network management system. A system architecture of the C-DOCSIS system is shown in FIG. 1.

In the C-DOCSIS system architecture, a system terminal device, that is, a cable modem (Cable Modem, CM), connects a coaxial distribution network of an operator to a home network, and is responsible for data forwarding between them. A user equipment may be built in the CM, or may also exist as an independent device. A typical user equipment includes a personal computer, an eMTA, a home router, an STB, or the like.

The system headend, that is, a coaxial media conversion device (Coax Medium Converter, CMC), connects the coaxial distribution network to an aggregation network, is responsible for data forwarding between them, and accesses the configuration system and the network management system of the operator through the aggregation network.

The C-DOCSIS configuration system provides a service and device configuration service of the C-DOCSIS system, and implements functions such as generation and delivery of a configuration file and a software upgrade of a terminal device. The configuration system includes a Dynamic Host Configuration Protocol (Dynamic Host Configuration Protocol, DHCP) server, a configuration file server, a software download server, a clock protocol server, a policy server, and the like.

According to a definition in the DOCSIS standard, a plurality of service channels is supported between a cable modem termination system (Cable Modem Termination System, CMTS) and a CM. A flow classification manner may be implemented based on an Ethernet or Internet Protocol (Internet Protocol, IP) header, or a Transmission Control Protocol (Transmission Control Protocol, TCP)/User Datagram Protocol (User Datagram Protocol, UDP) header, where the most widely used flow classification manner is classification according to a source IP flow. A packet that cannot match a flow classification condition is transmitted in a default flow, and after flow classification, a flow is not mapped to a virtual local area network (Virtual Local Area Network, VLAN).

In a Layer 2 access technology, flow classification in a multi-service flow mechanism of a telecommunications Layer 2 network is performed according to an Ethernet header field, and does not support an IP header or a TCP/UDP header. After the flow classification, a flow is mapped to a VLAN.

The C-DOCSIS defines that a Layer 2 access network is introduced to a hybrid fiber-coaxial (Hybrid Fiber-Coaxial, HFC) network. A problem of this network is that, when a CM flow classification condition is an IP address or a UDP/TCP port number, a management packet sent by a CM may pass through a different service channel. As shown in FIG. 2, a Simple Network Management Protocol (Simple Network Management Protocol, SNMP) or a Dynamic Host Configuration Protocol (Dynamic Host Configuration Protocol, DHCP) packet (including an IP header) sent by a central processing unit (Central Processing Unit, CPU) of a CM matches a flow classification condition and passes through a service channel 2; whereas an Address Resolution Protocol (Address Resolution Protocol, ARP) packet (without an IP header) cannot match a flow classification condition and passes through a service channel 3 (a default flow). However, the service channel 2 and the service channel 3 correspond to different service VLANs (Service VLAN, SVLAN), and therefore a management packet of a same device passes through a different service channel and uses a different SVLAN. A result is that a Media Access Control (Media Access Control, MAC) address of the CM is sometimes learnt, on an optical line terminal (Optical Line Terminal, OLT), by an SVLAN200 and sometimes learnt by an SVLAN300 (MAC learning table flapping), and therefore a service is unavailable.

### SUMMARY

An embodiment of the present invention provides a Layer 2 access method on an HFC network, including:
receiving a DHCP packet of a terminal device, extracting a source MAC address and a device type from the DHCP packet, and generating a correspondence between the source MAC address and an SVLAN according to a correspondence between the device type and the SVLAN; and
when a data packet of the terminal device is received, extracting the source MAC address from the data packet, obtaining the corresponding SVLAN according to the correspondence between the MAC address and the SVLAN, and forwarding the data packet of the terminal device according to the corresponding SVLAN.

According to one aspect, the obtaining a device type from the Dynamic Host Configuration Protocol packet specifically includes:
extracting an Option 60 from the Dynamic Host Configuration Protocol packet, and obtaining the device type from the Option 60.

According to one aspect, the forwarding the data packet of the terminal device according to the corresponding service virtual local area network specifically includes:
adding the corresponding service virtual local area network to the data packet; and
sending, through a service channel corresponding to the service virtual local area network, the data packet that includes the service virtual local area network.

An embodiment of the present invention provides a coaxial media conversion device, including:
an SVLAN mapping module, configured to store a correspondence between a device type and an SVLAN;
a DHCP processing module, configured to receive a DHCP packet of a terminal device, extract a source MAC address and a device type from the DHCP packet, and generate a correspondence between the source MAC address and the SVLAN according to the correspondence between the device type and the SVLAN; and
a flow classifying module, configured to receive a data packet of the terminal device, extract the source MAC address from the data packet, obtain the corresponding SVLAN according to the correspondence between the MAC address and the SVLAN, and forward the data packet of the terminal device according to the corresponding SVLAN.

According to one aspect, the flow classifying module specifically includes:
a user side port, configured to receive the data packet of the terminal device;
a service virtual local area network obtaining module, configured to extract the source Media Access Control address from the data packet, search for the locally stored correspondence between the Media Access Control address and the service virtual local area network, and obtain the service virtual local area network corresponding to the source Media Access Control address; and
a network side port, configured to forward the data packet of the terminal device according to the corresponding service virtual local area network.

An embodiment of the present invention provides a Layer 2 access system on an HFC, including a coaxial media conversion device and a plurality of terminal devices, where:
the coaxial media conversion device is configured to receive a DHCP packet of a terminal device, extract a MAC address and a device type from the DHCP packet, and generate a correspondence between the MAC address and an SVLAN according to a correspondence between the device type and the SVLAN; and when a data packet of the terminal device is received, extract the source MAC address from the data packet, obtain the corresponding SVLAN according to the correspondence between the MAC address and the SVLAN, and forward the data packet of the terminal device according to the corresponding SVLAN.

According to one aspect, the forwarding the data packet of the terminal device according to the corresponding service virtual local area network specifically includes:
adding the corresponding service virtual local area network to the data packet; and
sending, through a service channel corresponding to the service virtual local area network, the data packet that includes the service virtual local area network.

According to one aspect, the system further includes an optical line terminal, configured to receive the data packet of the coaxial media conversion device, extract the source Media Access Control address and the service virtual local area network from the data packet, and record the correspondence between the source Media Access Control address and the service virtual local area network.

According to the method, device and system provided by the embodiments of the present invention, a correspondence between a device type and an SVLAN is pre-configured; and when a DHCP packet of a terminal device is received, a correspondence between a MAC address of the terminal device and the SVLAN is obtained according to the correspondence between the device type and the SVLAN, and a data packet of the terminal device is forwarded according to the correspondence between the MAC address and the SVLAN, which can ensure that a data packet sent by a same terminal device is sent to a network side through one SVLAN, and a network side device can learn the correspondence between the MAC address and the SVLAN, thereby avoiding occurrence of a MAC address flapping phenomenon.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic architectural diagram of a C-DOCSIS system in the prior art;
FIG. 2 is a schematic architectural diagram of C-DOCSIS Layer 2 access in the prior art;
FIG. 3 is a schematic architectural diagram of a Layer 2 access system on an HFC network according to an embodiment of the present invention;
FIG. 4 is a flowchart of a Layer 2 access method on an HFC network according to an embodiment of the present invention;
FIG. 5 is a schematic structural diagram of a CMC according to an embodiment of the present invention;
FIG. 6 is a schematic structural diagram of a CMC according to an embodiment of the present invention; and
FIG. 7 is a schematic structural diagram of a Layer 2 access system on an HFC network according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

FIG. 3 shows a Layer 2 access system on an HFC network provided by an embodiment of the present invention, where the system includes: an optical line terminal (Optical Line Terminal, OLT) 30, a CMC 32, and a CM 34.

The CMC 32 is configured to implement a function of a C-DOCSIS system headend, and may be located in a position on a network that is close to a user side, for example, on an optical node of an HFC network. The CM 34 may be connected to a user equipment such as a PC and/or an STB, and in the following embodiment, a CM and a user equipment connected to a CM are generally called terminal devices.

The CMC 32 may communicate with the CM 34 by using a radio frequency interface, and is connected to an aggregation network by using a network side interface, thereby implementing data flow forwarding and service mapping.

A plurality of service channels may be set between the CMC 32 and the CM 34, where the CM 34 is configured to classify a packet that is sent to the CMC 32 (flow classification), and send the packet to the CMC 32 according to a corresponding service channel. The packet herein includes a packet sent by the CM 34 to the CMC 32, and also includes a packet sent to the CMC 32, through the CM 34, by a user equipment that is connected to the CM 34.

An HFC network defined by the C-DOCSIS integrates a Layer 2 access technology, and consequently a packet of a same terminal device passes through a different service channel after being classified by the CM 34. To solve the problem, this embodiment provides a Layer 2 access method on an HFC network. According to the method, a packet from the CM 34 is classified on the CMC 32, and different service packets are distinguished and further mapped to different SVLANs.

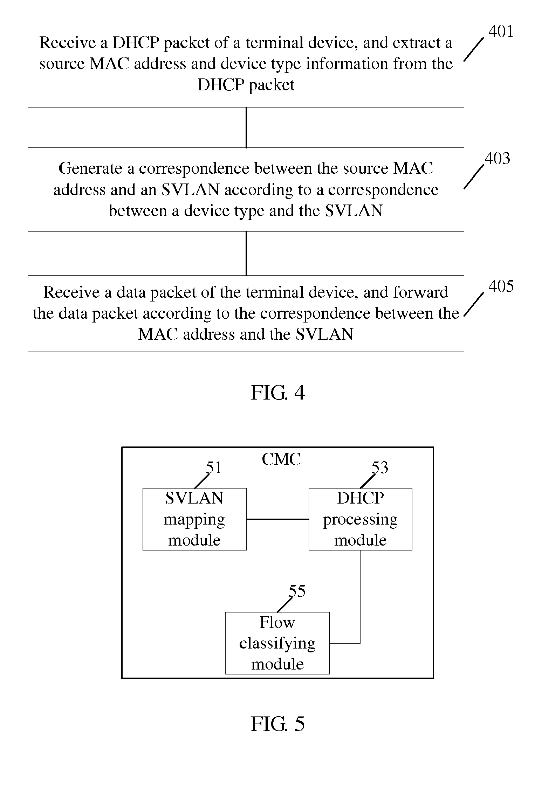

Specifically, a process of the provided method is shown in FIG. 4, including:
Step 401: Receive a DHCP packet of a terminal device, and extract a source MAC address and device type information from the DHCP packet.

The device type information includes a PC, an STB, a CM, and the like, and may be carried in Option 60 information. For example, in a DHCP packet sent by an STB, if a carried Option 60 is "STB" or the like, the extracting device type information from the DHCP packet may be: obtaining the Option 60 from the DHCP packet, and obtaining the device type information of the terminal device from the Option 60.

The device type information may also be separately identified and carried in the DHCP packet. In the following embodiment, that an Option 60 carries the device type information is used as example.
Step 403: Generate a correspondence between the source MAC address and an SVLAN according to a correspondence between a device type and the SVLAN.

Before this step, the correspondence between the device type and the SVLAN needs to be configured on the CMC 32, so that a packet sent by a terminal device is sent through one SVLAN. In this embodiment, the correspondence between the device type and the SVLAN may specifically be a correspondence between an Option 60 and the SVLAN. As shown in FIG. 5, an Option 60 of a PC may correspond to an SVLAN X, an Option 60 of an STB may correspond to an SVLAN Y, an Option 60 of a CM may correspond to an SVLAN Z, and so on, as shown below:
PC Option 60-SVLAN X -> PC MAC address-SVLAN X
STB Option 60-SVLAN Y-> STB MAC address-SVLAN Y
CM Option 60-SVLAN Z -> CM MAC address-SVLAN Z

After extracting the source MAC address and the device type from the DHCP packet, the CMC 32 obtains the correspondence between the source MAC address and the SVLAN according to the pre-configured correspondence between the device type and the SVLAN. Specifically, the source MAC address and an Option 60 may be extracted, and the correspondence between the source MAC address and the SVLAN is obtained according to a pre-configured correspondence between the Option 60 and the SVLAN.

The CMC 32 locally stores the correspondence between the MAC address and the SVLAN.
Step 405: Receive a data packet of the terminal device, and forward the data packet according to the correspondence between the MAC address and the SVLAN.

The CMC 32 receives the data packet of the terminal device, extracts the source MAC address from the data packet, obtains the corresponding SVLAN according to the correspondence between the MAC address and the SVLAN that is stored locally, and forwards the data packet according to the corresponding SVLAN.

A process of forwarding the data packet may be: adding the corresponding SVLAN to the data packet, and forwarding the data packet to a network side through a service channel corresponding to the SVLAN.

If the CMC 32 receives a data packet of the CM 34, extracts a source MAC address of the CM 34, that is, a CM MAC, queries a correspondence between the MAC address and an SVLAN, and learns that the CM MAC corresponds to an SVLAN Z, then the CMC 32 adds the SVLAN Z to the data packet, and sends the data packet to the OLT 30 through a service channel corresponding to the SVLAN Z.

According to the method provided by this embodiment, a correspondence between a device type and an SVLAN is pre-configured; and when a DHCP packet of a terminal device is received, a correspondence between a MAC address of the terminal device and the SVLAN is obtained according to the correspondence between the device type and the SVLAN, and a data packet of the terminal device is forwarded according to the correspondence between the MAC address and the SVLAN, which can ensure that a data packet sent by a same terminal device is sent to a network side through one SVLAN, and a network side device can learn the correspondence between the MAC address and the SVLAN, thereby avoiding occurrence of a MAC address flapping phenomenon.

An embodiment of the present invention provides a CMC. As shown in FIG. 5, the CMC includes:
an SVLAN mapping module 51, configured to store a correspondence between a device type and an SVLAN, where in this embodiment, the correspondence may be a correspondence between an Option 60 and the SVLAN, and the Option 60 carries the device type;
a DHCP processing module 53, configured to receive a DHCP packet of a terminal device, extract a source MAC address and a device type from the DHCP packet, generate a correspondence between the source MAC address and the SVLAN according to the correspondence between the device type and the SVLAN, and store, on a flow classifying module 55, the correspondence between the source MAC address and the SVLAN that is generated; and
the flow classifying module 55, configured to receive a data packet of the terminal device, extract the source MAC from the data packet, obtain the corresponding SVLAN according to the correspondence between the MAC address and the SVLAN that is stored, and forward the data packet of the terminal device according to the corresponding SVLAN, where:
   the flow classifying module 55 includes:
      a user side port 551, configured to receive the data packet of the terminal device, where the user side port 55 may include a plurality of radio frequency interfaces that are used to communicate with a plurality of terminal devices;
      an SVLAN obtaining module 553, configured to extract the source MAC address from the data packet, search for the locally stored correspondence between the MAC address and the SVLAN, and obtain the SVLAN corresponding to the source MAC address; and
      a network side port 555, configured to forward the data packet of the terminal device according to the corresponding SVLAN, where the forwarding, by the network side port 555, the data packet of the terminal device according to the corresponding SVLAN may specifically be: adding the corresponding SVLAN to the data packet, and sending the data packet that carries the SVLAN through a service channel corresponding to the SVLAN.

The CMC provided by this embodiment may be connected to a plurality of CMs, and the CMs may be connected to a PC and/or an STB, and the like. In this embodiment, a correspondence between a device type of a terminal device and an SVLAN is pre-configured on the SVLAN mapping module 51. In this embodiment, that the device type is carried in an Option 60 is used as an example, and a correspondence between the Option 60 and the SVLAN needs to be configured on the SVLAN mapping module 51. For example, an Option 60 of a PC corresponds to an SVLAN X, an Option 60 of an STB corresponds to an SVLAN Y, an Option 60 of a CM corresponds to an SVLAN Z, and so on.

After receiving a DHCP packet of a CM, the DHCP processing module 53 extracts a source MAC address and an Option 60 from the DHCP packet, obtains the SVLAN Z corresponding to the source MAC address of the CM according to the correspondence between the Option 60 and the SVLAN that is stored on the SVLAN mapping module 51, creates a correspondence between the MAC address of the CM and the SVLAN Z, and stores the correspondence on the flow classifying module 55.

After receiving a DHCP packet of an STB, the DHCP processing module 53 extracts a source MAC address and an Option 60 from the DHCP packet, obtains the SVLAN Y corresponding to the source MAC address of the STB according to the correspondence between the Option 60 and the SVLAN that is stored on the SVLAN mapping module 51, creates a correspondence between the MAC address of the STB and the SVLAN Y, and stores the correspondence on the flow classifying module 55.

Likewise, after receiving a DHCP packet of a PC, the DHCP processing module 53 extracts a source MAC address and an Option 60 from the DHCP packet, obtains the SVLAN X corresponding to the source MAC address of the PC according to the correspondence between the Option 60 and the SVLAN that is stored on the SVLAN mapping module 51, creates a correspondence between the MAC address of the PC and the SVLAN X, and stores the correspondence on the flow classifying module 55.

When receiving a data packet of a terminal device (a CM, an STB, or a PC), the flow classifying module 55 extracts a MAC address from the data packet, selects a corresponding SVLAN according to the stored correspondence between the MAC address and the SVLAN, and sends the data packet.

According to the CMC provided by this embodiment, a correspondence between a device type and an SVLAN is pre-configured; and when a DHCP packet of a terminal device is received, a correspondence between a MAC address of the terminal device and the SVLAN is obtained according to the correspondence between the device type and the SVLAN, and a data packet of the terminal device is forwarded according to the correspondence between the MAC address and the SVLAN, which can ensure that a data packet sent by a same terminal device is sent to a network side through one SVLAN, and a network side device can learn the correspondence between the MAC address and the SVLAN, thereby avoiding occurrence of a MAC address flapping phenomenon.

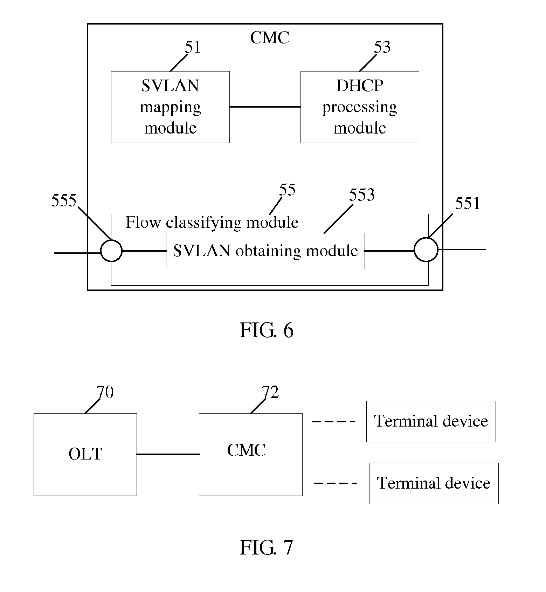

An embodiment of the present invention provides a Layer 2 access system on an HFC network. As shown in FIG. 7, the system includes a CMC 72 and a plurality of terminal devices, where a terminal device may be a CM, or may further be an STB, a PC, or the like that is connected to a CM.

The CMC 72 is configured to receive a DHCP packet of a terminal device, extract a source MAC address and a device type from the DHCP packet, and generate a correspondence between the source MAC address and an SVLAN according to a correspondence between the device type and the SVLAN; and when a data packet of the terminal device is received, extract the source MAC address from the data packet, obtain the corresponding SVLAN according to the correspondence between the MAC address and the SVLAN, and forward the data packet of the terminal device according to the corresponding SVLAN.

The forwarding, by the CMC 72, the data packet of the terminal device according to the corresponding SVLAN may specifically be: adding the corresponding SVLAN to the data packet, and forwarding the data packet that carries the SVLAN to a network side through a service channel corresponding to the SVLAN.

The system provided by this embodiment may further include an OLT 70, where a plurality of service channels is set between the OLT 70 and the CMC 72, and each service channel corresponds to one SVLAN. The OLT 70 is configured to receive a data packet forwarded by the CMC 72, and record a correspondence between a source MAC address and an SVLAN that is in the data packet. In this way, when a packet is received from the network side, the OLT 70 selects a corresponding service channel according to the correspondence between the source MAC address and the SVLAN, and sends the packet to a corresponding terminal in a downstream direction.

According to the Layer 2 access system provided by this embodiment, a correspondence between a device type and an SVLAN is pre-configured; and when a DHCP packet of a terminal device is received, a correspondence between a MAC address of the terminal device and the SVLAN is obtained according to the correspondence between the device type and the SVLAN, and a data packet of the terminal device is forwarded according to the correspondence between the MAC address and the SVLAN, which can ensure that a data packet sent by a same terminal device is sent to a network side through one SVLAN, and a network side device can learn the correspondence between the MAC address and the SVLAN, thereby avoiding occurrence of a MAC address flapping phenomenon.

A person of ordinary skill in the art may understand that all or a part of the steps of the methods in the embodiments may be implemented by a program instructing relevant hardware. The program may be stored in a computer readable storage medium, such as a ROM/RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A Layer 2 access method on a hybrid fiber-coaxial network, comprising:
receiving a Dynamic Host Configuration Protocol packet of a terminal device, extracting a source Media Access Control address and a device type from the Dynamic Host Configuration Protocol packet, and generating a correspondence between the source Media Access Control address and a service virtual local area network according to a correspondence between the device type and the service virtual local area network; and
when a data packet of the terminal device is received, extracting the source Media Access Control address from the data packet, obtaining the corresponding service virtual local area network according to the correspondence between the Media Access Control address and the service virtual local area network, and forwarding the data packet of the terminal device according to the corresponding service virtual local area network.

2. The method according to claim 1, wherein the obtaining a device type from the Dynamic Host Configuration Protocol packet specifically comprises:
extracting an Option 60 from the Dynamic Host Configuration Protocol packet, and obtaining the device type from the Option 60.

3. The method according to claim 1, wherein the forwarding the data packet of the terminal device according to the corresponding service virtual local area network specifically comprises:
adding the corresponding service virtual local area network to the data packet; and
sending, through a service channel corresponding to the service virtual local area network, the data packet that comprises the service virtual local area network.

4. The method according to any one of claims 1 to 3, wherein the terminal device comprises one or more of a cable modem, a PC, and a set top box.

5. A coaxial media conversion device, comprising:
an SVLAN mapping module, configured to store a correspondence between a device type and a service virtual local area network;
a DHCP processing module, configured to receive a Dynamic Host Configuration Protocol packet of a terminal device, extract a source Media Access Control address and the device type from the Dynamic Host Configuration Protocol packet, and generate a correspondence between the source Media Access Control address and the service virtual local area network according to the correspondence between the device type and the service virtual local area network; and
a flow classifying module, configured to receive a data packet of the terminal device, extract the source Media Access Control address from the data packet, obtain the corresponding service virtual local area network according to the correspondence between the Media Access Control address and the service virtual local area network, and forward the data packet of the terminal device according to the corresponding service virtual local area network.

6. The device according to claim 5, wherein the flow classifying module specifically comprises:
a user side port, configured to receive the data packet of the terminal device;
a service virtual local area network obtaining module, configured to extract the source Media Access Control address from the data packet, search for the locally stored correspondence between the Media Access Control address and the service virtual local area network, and obtain the service virtual local area network corresponding to the source Media Access Control address; and
a network side port, configured to forward the data packet of the terminal device according to the corresponding service virtual local area network.

7. A Layer 2 access system on a hybrid fiber-coaxial network, comprising a coaxial media conversion device and a plurality of terminal devices, wherein:
the coaxial media conversion device is configured to receive a Dynamic Host Configuration Protocol packet of a terminal device, extract a Media Access Control address and a device type from the Dynamic Host Configuration Protocol packet, and generate a correspondence between the Media Access Control address and a service virtual local area network according to a correspondence between the device type and the service virtual local area network; and when a data packet of the terminal device is received, extract the source Media Access Control address from the data packet, obtain the corresponding service virtual local area network according to the correspondence between the Media Access Control address and the service virtual local area network, and forward the data packet of the terminal device according to the corresponding service virtual local area network.

8. The system according to claim 7, wherein the forwarding the data packet of the terminal device according to the corresponding service virtual local area network specifically comprises:
adding the corresponding service virtual local area network to the data packet; and
sending, through a service channel corresponding to the service virtual local area network, the data packet that comprises the service virtual local area network.

9. The system according to claim 7 or 8, further comprising an optical line terminal, configured to receive the data packet of the coaxial media conversion device, extract the source Media Access Control address and the service virtual local area network from the data packet, and record the correspondence between the source Media Access Control address and the service virtual local area network.

10. The system according to claim 7, wherein the terminal device comprises a cable modem, a plurality of service channels is set between the cable modem and the coaxial media conversion device, and the cable modem is configured to classify a packet that is sent to the coaxial media conversion device and send, according to a corresponding service channel, the packet to the coaxial media conversion device.

11. A coaxial media conversion device, comprising a processor and a memory, wherein:
the memory is configured to store a correspondence between a device type and a service virtual local area network; and
the processor is configured to receive a Dynamic Host Configuration Protocol packet of a terminal device, extract a source Media Access Control address and the device type from the Dynamic Host Configuration Protocol packet, and generate a correspondence between the source Media Access Control address and the service virtual local area network according to the correspondence between the device type and the service virtual local area network; and receive a data packet of the terminal device, extract the source Media Access Control address from the data packet, obtain the corresponding service virtual local area network according to the correspondence between the Media Access Control address and the service virtual local area network, and forward the data packet of the terminal device according to the corresponding service virtual local area network.
